# EUROPÄISCHE PATENTSCHRIFT

(11) **EP 0 797 334 B1**
(45) Veröffentlichungstag und Bekanntmachung des Hinweises auf die Patenterteilung: **30.08.2006**
(21) Anmeldenummer: 97102044.1
(22) Anmeldetag: 10.02.1997
(51) Int. Cl.: H04L 27/32

(54) **Datenübertragung mittels FSK und ASK zugleich**
Data transmission using FSK and ASK simultaneously
Transmission de données en employant simultanément MDF et MDA

(30) Priorität: 23.03.1996 DE 19611576
(43) Veröffentlichungstag der Anmeldung: 24.09.1997
(73) Patentinhaber: Bayerische Motoren Werke Aktiengesellschaft, 80788 München (DE)
(72) Erfinder: Bartz, Rüdiger, 82256 Fürstenfeldbruck (DE)

(56) Entgegenhaltungen:
- DE-A- 4 138 175
- PATENT ABSTRACTS OF JAPAN vol. 009, no. 143 (E-322), 18. Juni 1985 (1985-06-18) & JP 60 025354 A (FUJITSU KK), 8. Februar 1985 (1985-02-08)
- CARLSON A.B.: "Communication Systems" 1. Januar 1986 (1986-01-01) , MCGRAW HILL INTERNATIONAL , SINGAPORE XP002145957 * Seite 519, Zeile 12 - Seite 520, Zeile 4 *

## Beschreibung

Die Erfindung bezieht sich auf ein Verfahren nach dem Oberbegriff des Patentanspruchs 1.

ASK wird i.d.R. bei funktechnischen Einrichtungen zur digitalen Datenübertragung und beispielsweise bei Funkfembedienungen für Fahrzeuge benutzt. Dabei wird häufig ein Modulationsgrad von 100% angewandt, d.h. für das Signal "1" wird die volle Sendeleistung, für das Signal "0" wird keine Sendeleistung übertragen.

Da kommerzielle Anwendungen nur in den ISM-Bändem (Industrial Scientific Medicial Applications) möglich sind und diese Bänder schmalbandig sind, kommt es beispielsweise durch andere Funksender, die auf der gleichen Frequenz oder zumindest innerhalb der Eingangsbandbreite des Empfängers senden, zu Störungen, was zu Datenverlust und somit zur Funktionsbeeinflussung führt. Das Problem tritt angesichts der wachsenden Anzahl von Anwendungen, die im IMS-Band senden, verstärkt auf. Hinzu kommt die bei Serienprodukten, wie beispielsweise Fahrzeugen aus Kostengründen häufig anzutreffende Baugleichheit von Sendern und den jeweils zugeordneten Empfängern bei den Fahrzeugen eines Herstellers.

Ein denkbarer Lösungsansatz ist in Form des Frequenzmultiplex, auch Spread-Spektrum-Verfahren genannt, an sich bekannt. Dabei werden Nachrichten auf verschiedenen Frequenzen (Kanälen) übertragen. Ein gestörter Kanal (Frequenz) hat dann keine Auswirkung, da die Information redundant auf den anderen Kanälen vorliegt. Zwar wächst dabei die Datensicherheit entsprechend der Anzahl der Übertragungskanäle, aber auch der technische Aufwand in Sender und Empfänger. Bei notwendigerweise kostengünstigen und im Bauvolumen begrenzten Sendern, wie sie beispielsweise bei Fahrzeugen erforderlich und durch einen Funkfernbedienungssender in Schlüsselform realisiert sind, ist dieses Verfahren nicht anwendbar.

Aus der DE 41 38 175 A1 ist ein Verfahren zum Übermitteln von codierten Befehlen durch Schallaussendung im Wasser, insbesondere um in der Nord- und Ostsee Seeminen scharfzuschalten oder sie zu taktischen Zwecken vorübergehend oder zu Räumzwecken dauerhaft in ihren unscharfen Zustand zurückzuführen, bekannt. Zur Überwindung von Fadingeffekten des Flachwasserkanals, den die Nord- bzw. Ostsee darstellen, wird vorgeschlagen, senderseitig für eine Codewertigkeit der Codeelemente eines Sendecodes eine erste Frequenz und für eine zweite Codewertigkeit eine davon abweichende zweite Frequenz zu erzeugen. Zwecks Erhöhung der Sicherheit gegen empfängerseitige Fehlinterpretation von zufällig oder manipuliert gestörten Sendesignalen bei Berücksichtigung eines geringen Energieverbrauchs auf der Empfängerseite wird senderseitig zusätzlich für die erste Codewertigkeit der Codeelemente eine dritte Frequenz und für die zweite Codewertigkeit eine davon abweichende vierte Frequenz generiert, die sich von der ersten und zweiten Frequenz signifikant unterscheiden. Für ein Codeelement bestimmter Codewertigkeit werden beide dieser Codewertigkeit zugeordnete Frequenzen zeitlich unmittelbar nacheinander während jeweils eines vorgegebenen Zeitabschnitts innerhalb der Sendedauer des Codeelements ausgesendet.

Aus dem Dokument PATENT ABSTRACTS OF JAPAN Bd. 009, Nr. 143 (E-322), 18. Juni 1985 (1985-06-18) & JP 60 025354 A (FUJITSU KK), 8. Februar 1985 (1985-02-08) ist eine Vorrichtung zur Verhinderung einer Verschlechterung des Signal-Rauschverhaltens bekannt. Hierzu wird eine ASK-Modulation auf einen Träger angewandt, der einer PSK- oder FSK-Modulation mit einem Sub-Modulations-Signal zur Synchronisation mit einem Haupt-Modulationssignal unterworfen und in eine Kombination von 1, 0 und 0, 1 Codes konvertiert wird.

Der Erfindung liegt die Aufgabe zugrunde, ein Verfahren der eingangs genannten Art zu schaffen, das mit geringem Aufwand ein hohes Maß an Störsicherheit bietet.

Die Erfindung löst diese Aufgabe durch die kennzeichnenden Merkmale des Patentanspruchs 1.

Das an sich bekannte Frequenz-Shift-Keying (FSK) besteht darin, bei einem Bitmuster die Informationen für "0" und "1" mit zwei Frequenzen zu übertragen. Zwischen den beiden Frequenzen besteht eine definierte Differenz. Wesentlich für die Erfindung ist die Überlagerung der beiden an sich bekannten Verfahren ASK und FSK. Kommt es zu einer Störung einer der Frequenzen, so reicht die im anderen Frequenzsignal enthaltene Information aus, das Bitmuster fehlerfrei zu übertragen.

Die Ausführung der Erfindung ist auf verschiedene Weise möglich. Vorzugsweise arbeitet das FSK mit zwei Frequenzen. Dies hat gegenüber der an sich bestehenden Möglichkeit, mehr als zwei Frequenzen zu verwenden, den Vorteil des geringen Aufwands.

Die beiden Frequenzen können auch mit der gleichen Häufigkeit benutzt werden. Dies ermöglicht eine vereinfachte Signalauswertung.

Die jeweiligen Zeitfenster für die beiden Frequenzen können unterschiedlich oder aber auch gleich sein. Letzteres bietet ebenfalls den Vorteil der einfachen Signalauswertung.

Schließlich kann die Änderungsfrequenz für FSK um den Faktor 3 größer als die Änderungsfrequenz des Bitmusters sein. Dadurch ergibt sich eine gute Redundanz bei geringem schaltungstechnischen Aufwand.

Anhand der Zeichnung ist die Erfindung weiter erläutert. Es zeigt
- Fig. 1: ein Diagramm zur Erläuterung des bekannten ASK-Übertragungsverfahrens,
- Fig. 2: ein Diagramm zur Erläuterung des bekannten FSK-Übertragungsverfahrens,
- Fig. 3: ein Diagramm zur Erläuterung der Erfindung,
- Fig. 4: und 5 Einzelheiten zum Diagramm von Fig. 3,
- Fig. 6: die Auswirkungen einer Störung für den einen Übertragungskanal,
- Fig. 7: das am Empfänger ankommende Signal des zweiten Übertragungskanals,
- Fig. 8: eine schaltungstechnische Realisierung der Erfindung und
- Fig. 9: eine Wahrheitstabelle für das erfindungsgemäße Verfahren.

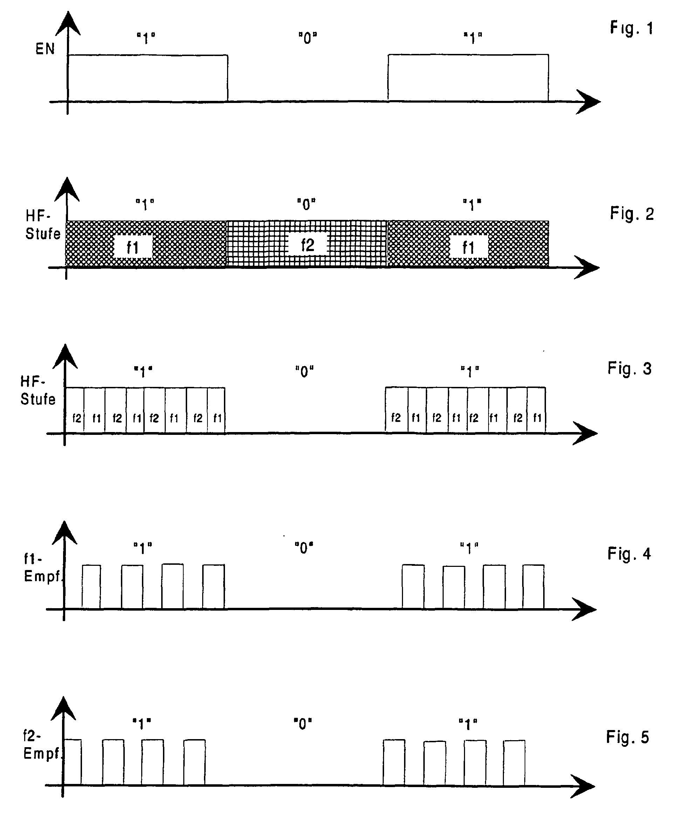

Das in Fig. 1 gezeigte ASK-Verfahren zeigt die Übertragung der Informationen "1" und "0" durch einen Betrieb eines Senders mit voller ("1") und ausgeschalteter ("0") Leistung. Das übertragene Bitmuster 101 ist beispielhaft gewählt.

Die Übertragung desselben Bitmusters mit Hilfe des an sich bekannten FSK-Verfahrens zeigt Fig. 2. Dabei werden die Informationen "0" und "1" mit unter schiedlichen Frequenzen f1 und f2 übertragen.

Das erfindungsgemäße Verfahren, das in Fig. 3 schematisch dargestellt ist, besteht darin, die Information "1" in der Form zu übertragen, daß während der Übertragungsdauer diese Information zyklisch zwischen zwei Frequenzen f1 und f2 = f1 + Δf1 umgeschaltet wird. Die Information "0" wird übertragen, indem während der Übertragungsdauer der Sender ausgeschaltet ist.

In den beiden Kanälen für die Frequenzen f1 und f2 ergibt sich das in den Figuren 4 und 5 dargestellte Signalmuster. Es ist ohne weiteres zu erkennen, daß die Information "1" redundant auf beiden Kanälen vorliegt.

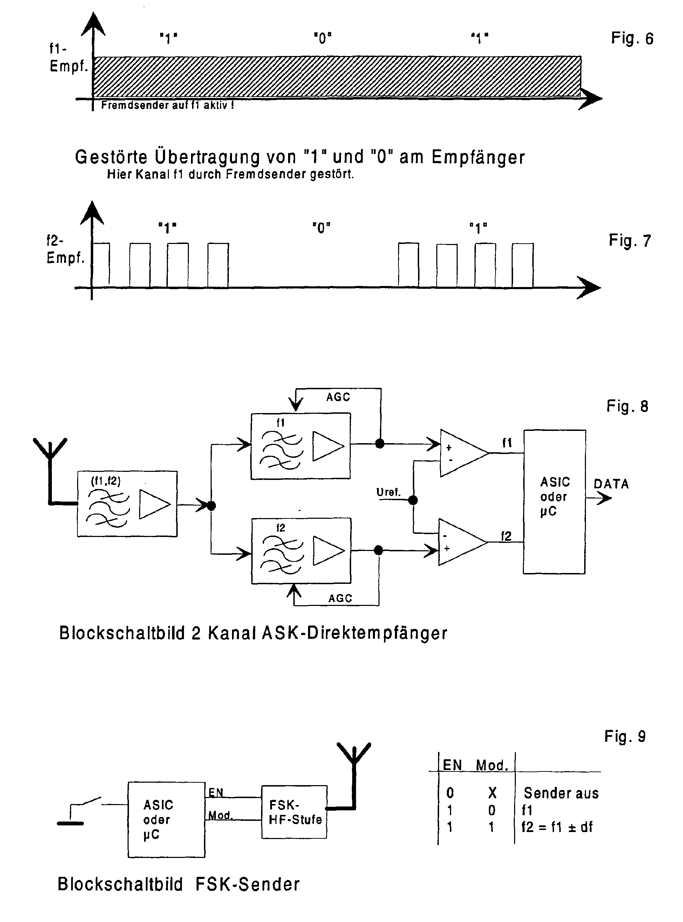

Eine Störung auf einem der Kanäle, beispielsweise für die Frequenz f1 ist in Fig. 6 gezeigt. Es sei dabei angenommen, daß die Sendeleistung des Fremdsenders in etwa der des für die Signalübertragung verwendeten Senders entspricht. In einem auf die Frequenz f1 eingestellten Empfänger ergibt sich dann die in Fig. 6 gezeigte Situation.

Bei entsprechendem Abstand Δf der beiden Frequenzen f1 und f2 ergibt sich im Empfänger für die Frequenz f2 das in Fig. 7 gezeigte Signalbild. Dieses ist identisch mit dem Signalverlauf von Fig. 5. Es ist ohne weiteres zu erkennen, daß trotz der Störung des Kanals f1 die Information 101 ohne weiteres mit Hilfe des Empfängers für die Frequenz f2 aufgenommen werden kann.

Die in Fig. 8 dargestellte Realisierung eines im Rahmen der Erfindung verwendeten Empfängers besteht aus einem 2 kanalfähigen ASK-Empfänger, der die einzelnen Kanäle zugänglich macht. Es kann sich dabei auch um einen ASK-Super-Het-Empfänger mit pendelndem Mischoszillator handeln, der mittels PLL-Technik- und Logik aufsynchronisiert.

In Fig. 8 ist ein 2 Kanal-Direktempfänger dargestellt, bei dem jeder einzelne Kanal über eine Verstärkungsregelung (AGC) verfügt. Eine nachgeschaltete Logik (ASIC) kann die Information "1" aus dem zyklischen f1-f2-Folgen bzw. die Information "0" aus den nicht-zyklischen f1-f2-Folgen bilden. Ist nun, wie in den Figuren 6 und 7 dargestellt, eine Frequenz (Kanal) f1 oder f2 gestört, ist die "0" bzw. "1" durch das Fehlen bzw. pulsierende Senden der anderen Frequenz noch erkennbar.

Bei einer Störung eines Kanals, z.B. durch ein Fremdsender auch aus der gleichen Systemfamilie ist die Datenübertragung über den anderen Kanal noch gegeben. Senderseitig können hierzu übliche ASK- und FSK-Übertragungsverfahren verwendet werden.

Die in Fig. 9 dargestellte Wahrheitstabelle für den Sender dient zur Erläuterung und zeigt den Betrieb des Senders, der ebenfalls über eine Logik (ASIC) gesteuert wird.

## Patentansprüche

1. Verfahren zum Übertragen eines Bitmusters als Binärcode mit Hilfe eines Funksignals und unter Verwendung eines Amplituden-Shift-Keying ASK, bei dem der Übertragung des Bitmusters ein Frequenz-Shift-Keying FSK überlagert wird, **dadurch gekennzeichnet, dass** das Bitmuster von einem Funkfernbedienungssender in Schlüsselform zu einem Fahrzeug übertragen wird und dass ein BIT-Zustand ("1") in der Form übertragen wird, dass während der Übertragungsdauer dieses BIT-Zustands ein ASK Modulationszustand eingestellt und zyklisch zwischen nur zwei Frequenzen (f1, f2) des überlagerten FSKs umgeschaltet wird.

2. Verfahren nach Anspruch 1, **dadurch gekennzeichnet, dass** die beiden Frequenzen mit der gleichen Häufigkeit benutzt werden.

3. Verfahren nach einem der Ansprüche 1 oder 2, **dadurch gekennzeichnet, dass** die jeweiligen Zeitfenster für die Frequenzen gleich sind.

4. Verfahren nach einem der Ansprüche 1 bis 3, **dadurch gekennzeichnet, dass** die Änderungsfrequenz für das FSK um den Faktor 3 größer als die Änderungsfrequenz des Bitmusters ist.

## Claims

1. A method for transmitting a bit pattern as a binary code with the aid of a radio signal and using amplitude shift keying ASK, in which frequency shift keying FSK is superimposed on the transmission of the bit pattern, **characterised in that** the bit pattern is transmitted in code form from a radio remote control transmitter to a vehicle and **in that** a bit state ("1 ") is transmitted in the form wherein, during the transmission duration of this bit state, an ASK modulation state is adjusted and there is a cyclic switch-over between only two frequencies (f1, f2) of the superimposed FSK.

2. A method according to claim 1, **characterised in that** the two frequencies are used with the same degree of frequency.

3. A method according to either of claims 1 or 2, **characterised in that** the respective time windows for the frequencies are the same.

4. A method according to any one of claims 1 to 3, **characterised in that** the changing frequency for the FSK is greater by the factor 3 than the changing frequency of the bit pattern.

## Revendications

1. Procédé pour transmettre un profil binaire sous forme de code binaire à l'aide d'un signal radio et en utilisant une modulation d'amplitude MDA, avec une modulation de fréquence MDF superposée à la transmission du profil binaire,
**caractérisé en ce que**
le profil binaire est transmis par un émetteur de télécommande en forme de clé à un véhicule et qu'un état binaire ("1") est transmis sous une forme telle que, pendant la période de transmission de cet état binaire, un état de modulation MDA est activé et commuté de manière cyclique entre seulement deux fréquences (f1, f2) de la MDF superposée.

2. Procédé selon la revendication 1,
**caractérisé en ce que**
les deux fréquences sont utilisées aussi souvent l'une que l'autre.

3. Procédé selon une des revendications 1 ou 2,
**caractérisé en ce que**
les fenêtres temporelles respectives des fréquences sont identiques.

4. Procédé selon une des revendications 1 à 3,
**caractérisé en ce que**
la fréquence de variation pour la MDF peut être supérieure à la fréquence de variation du profil binaire d'un facteur 3.
